# EUROPÄISCHE PATENTANMELDUNG

(11) **EP 3 255 299 A1**
(43) Veröffentlichungstag der Anmeldung: **13.12.2017**
(21) Anmeldenummer: 17178999.3
(22) Anmeldetag: 09.12.2010
(51) Int. Cl.: F16D 69/02, F16D 23/02

(54) **REIBELEMENT FÜR SYNCHRONISIEREINRICHTUNG**

(30) Priorität: 17.12.2009 DE 102009058693
(62) Teilanmeldung aus: 10805678.9
(71) Anmelder: Schaeffler Technologies AG & Co. KG, 91074 Herzogenaurach (DE)
(72) Erfinder: Franke, Constanze, 90766 Fürth (DE); Steinmetz, Stefan, 67269 Grünstadt (DE)

(57) **Zusammenfassung**

Reibelement für eine Synchronisiereinrichtungen sowie Vorrichtung zur Herstellung eines Reibelements für eine Synchronisiereinrichtung.

## Beschreibung

Die Erfindung betrifft Reibelemente mit den Merkmalen gemäß dem Oberbegriffen des Anspruchs 1.

Gemäß dem aktuellen Stand der Technik werden Synchronringe, welche in Synchronisiereinrichtungen beispielsweise von Schaltmuffengetrieben eingesetzt werden, aus Buntmetall verwendet oder es werden Ringe aus Trägermetall verwendet, die mit unterschiedlichen Materialien beschichtet oder beklebt sind, wie z.B. Carbonfaserplatten oder Sinter- oder Spritzmaterialien wie Molybdänbeschichtungen wie dies in der DE 10 2006 057 486 A1, DE 10 2004 060 016 A1 sowie DE 100 35 489 A1 offenbart ist.

Die bestehenden Systeme haben den Nachteil, dass z.B. Molybdänbeschichtungen bei hohen Anpresskräften und Gleitgeschwindigkeiten zum Fressen neigen, da das Öl zwar gut aus dem Reibkontakt verdrängt wird, durch die fehlende Porosität und der sich daraus ergebenden fehlenden Rückfederung (Schwammeffekt) der Schicht, aber kein neues Öl nachfließen kann, um das Fressen zu vermeiden.

Carbonmaterialien sind zum einen sehr teuer und zum anderen ist die Applikation auf die unterschiedlichsten Synchronringgeometrien schwierig, da ein entstehender Klebestoß als Fehlstelle wirken kann, an der sich der Belag leicht löst und in der Folge zu Komfortproblemen führen kann. Außerdem sind aufwendige Applikationswerkzeuge notwendig.

Durch die DE 10 2006 061 414 A1 wird ein Reibmaterial ebenfalls für den Einsatz in Synchronisiereinrichtungen offenbart, wobei keine kompletten Synchronringe mehr als Reibmaterial dienen, sondern Reibbelagelemente - im Rahmen dieser Schrift als Reibelemente oder Reibbelagpads oder Pads oder Friction-Pads bezeichnet - in einem Synchronring mit Ausnehmungen, wobei die Reibbelagpads in den Ausnehmungen angeordnet sind. Der Synchronring fungiert dabei als Träger oder Käfig. Auf diese Weise sind mit derartigen Friction-Pad-Systemen (FPS) sämtliche Anwendungen zu bedienen.

Der Erfindung liegt die Aufgabe zugrunde, ein Reibmaterial für das Friction-Pad-System zu entwickeln, dass gute Komforteigenschaften aufweist.

Die Aufgabe wird durch Reibelemente mit den Merkmalen gemäß Anspruch 1.

Erfindungsgemäß wird ein Reibelement für eine Synchronisiereinrichtung vorgeschlagen, wobei die Zusammensetzung dieses Reibelements folgendes enthält:
- 1-25% Friction Dust,
- 5-45% Phenolharz unmodifiziert oder modifiziert mit Cashewnussschalenöl oder NBR-Kautschuk,
- 1-25% anorganische Fasern,
- 1-25% Carbonfasern,
- 1-50% Celite und/oder Kokosnussschalenmehl,
- 1-30% Metallfasern oder Metallpulver,
- 1-25% organische Naturfasern,
- 0-15% SiC,
- 0-15% Chromoxid.

In einer bevorzugten Ausführungsform dieses Reibelements enthält die Zusammensetzung dieses Reibelements folgendes:
- 1-10% Friction Dust,
- 15-25% Phenolharz modifiziert mit Cashewnussschalenöl,
- 5-15% Mineralwolle ohne Shotanteil,
- 5-15% Carbonfasern,
- 15-25% Celite,
- 15-25% Kokosnussschalenmehl,
- 1-10% Kupferfasern,
- 5-15% Baumwollfasern.

In einer besonders bevorzugten Ausführungsform dieses Reibelements enthält die Zusammensetzung dieses Reibelements folgendes:
- 5% Friction Dust,
- 20% Phenolharz modifiziert mit Cashewnussschalenöl,
- 10% Mineralwolle ohne Shotanteil,
- 10% Carbonfasern,
- 20% Celite,
- 20% Kokosnussschalenmehl,
- 5% Kupferfasern,
- 10% Baumwollfasern.

In vorteilhafter Weise weisen die vorgeschlagenen Reibelemente folgenden Eigenschaften auf: Das Material ist beständig gegen Getriebeöl, erreicht in den Standardtests gegen unbehandelten Stahl in Getriebeöl einen Reibwert von 0,1 und hält diesen bei einer Flächenpressung von bis zu 20 N/mm² und einer Gleitgeschwindigkeit von 11 m/s konstant über die Lebensdauer. Eine Dauertemperaturbeständigkeit von 150°C und eine Kurzzeittemperaturbeständigkeit von bis zu 400°C ist ebenfalls gewährleistet. Zudem sind gute Komforteigenschaften gegeben.

Es wird auch eine Vorrichtung zur Herstellung eines Reibelements mit einer Presseinrichtung und einer Formplatte mit Ausnehmungen vorgeschlagen, wobei durch die Presseinrichtung Reibmaterial in die Ausnehmung gepresst wird, so dass durch die Form der Ausnehmungen in der Formplatte die Form der Reibelemente bestimmt wird.

In einer bevorzugten Ausführungsform sind die Ausnehmungen zu beiden Seiten der Formplatte (30) offen.

In einer weiteren bevorzugten Ausführungsform weist die Formplatte auf einer ersten Seite eine Unterplatte auf, wobei Formplatte und Unterplatte während des Pressvorgangs derart aufeinander aufliegen, dass sie sich nicht gegeneinander bewegen.

In einer weiteren bevorzugten Ausführungsform weist die Unterplatte Auswerferstifte auf, die in die Ausnehmungen in der Formplatte eindringen können und diese wieder verlassen können, um ein Auswerfen der Reibelemente nach dem Pressvorgang möglich zu machen.

In einer weiteren bevorzugten Ausführungsform weist die Pressvorrichtung einen Pressstempel auf und die Formplatte weist auf einer zweiten, der ersten Seite gegenüberliegenden Seite eine Dosierplatte auf, wobei Formplatte und Dosierplatte während des Pressvorgangs derart aufeinander aufliegen, dass sie sich nicht gegeneinander bewegen.

In einer weiteren bevorzugten Ausführungsform weist die Dosierplatte eine Ausnehmung auf, welche zur Formplatte hin offen ist und in welche der Pressstempel eindringen kann.

Weitere Vorteile und vorteilhafte Ausgestaltungen der Erfindung sind Gegenstand der nachfolgenden Figuren sowie deren Beschreibung.

Es zeigen im Einzelnen:
- Figur 1: schematische Darstellung der Vorrichtung zur Herstellung von Pads.
- Figur 2: beispielhaft einige Formen die die Pads nach der Herstellung mittels der Vorrichtung aufweisen können.
- Figur 3: schematische Darstellung eines Beispiels einer Formplatte
- Figur 4: schematische Darstellung einer Schleif-Vorrichtung zur Vereinzelung der Pads

In Folgenden werden mehrere Rezepturen zur Herstellung von Reibbelagpads angegeben. Die in den Rezepturen angegebenen Prozentangaben sind Masseprozent bezogenen auf Trockenmasse also auf das nach dem Herstellprozess fertig vorliegende Reibmaterial-Produkt.

Die Bestandteile einer Rezeptur werden in einem Mixer miteinander gemischt und anschließend in Pulverform der Vorrichtung zur Herstellung - die anschließend beschrieben wird - zugeführt.

Gemäß einer ersten Rezeptur - Reibmaterial vom Typ 1 genannt - ist folgende Zusammensetzung vorgesehen:

0-25% Friction Dust, 5-45% Phenolharz unmodifiziert oder modifiziert mit Cashewnußschalenöl oder NBR (Nitril-Butadien-Kautschuk), 1-25% organische Naturfasern, 1-25% organische Synthetikfasern, 1-45% Bariumsulfat, 1-50% Celite, 1-30% Metallfasern oder Metallpulver, 0-15% SiC, 0-15% Chromoxid.

Bei Friction Dust handelt es sich um ausgehärtetes, vermahlenes Phenolharz.

Insbesondere sind folgende Prozentsätze für das Reibmaterial vom Typ 1 vorteilhaft:

10% Friction Dust, 20% Phenolharz modifiziert mit Cashewnussschalenöl, 5% Hanffaser, 5% PAN-Faser, 10% Schwerspat, 40% Celite, 10% Kupferspäne.

Gemäß einer zweiten Rezeptur - Reibmaterial vom Typ 2 genannt - ist folgende Zusammensetzung vorgesehen:

1-25% Friction Dust, 5-45% Phenolharz unmodifiziert oder modifiziert mit Cashewnußschalenöl oder NBR, 1-25% anorganische Fasern, 1-25% Carbonfasern, 1-50% Celite und/oder Kokosnussschalenmehl, 1-30% Metallfasern oder Metallpulver, 1-25% organische Naturfasern, 0-15% SiC, 0-15% Chromoxid.

Insbesondere sind folgende Prozentsätze für das Reibmaterial vom Typ 2 vorteilhaft:

5% Friction Dust, 20% Phenolharz modifiziert mit Cashewnußschalenöl, 10% Mineralwolle ohne Shotanteil, 10% Carbonfasern, 20% Celite, 20% Kokosnussschalenmehl, 5% Kupferfasern, 10% Baumwollfasern.

Gemäß einer dritten Rezeptur - Reibmaterial vom Typ 3 genannt - ist folgende Zusammensetzung vorgesehen:

Kupferpulver oder Aluminiumpulver oder Bronzepulver oder andere Buntmetalle jeweils in Korngrößen von 50µm bis 1500µm und Phenolharz im Verhältnis Metall zu Phenolharz von 90:10 bis 50:50.

Insbesondere sind folgende drei Rezepturen für das Reibmaterial vom Typ 3 vorteilhaft:
- 80% Kupferpulver (500µm Korngröße, Legierungszusätze sind Zn, Al, Mo, Ti, Sn) mit 20% Phenolharz,
- 80% Aluminiumgries (1000µm Korngröße) mit 20% Phenolharz,
- 80% Bronze (Legierungszusätze sind neben Cu und Sn noch Zn, Ni, Mo, Graphit, Silicium-dioxid; Korngröße 700µm) mit 20% Phenolharz.

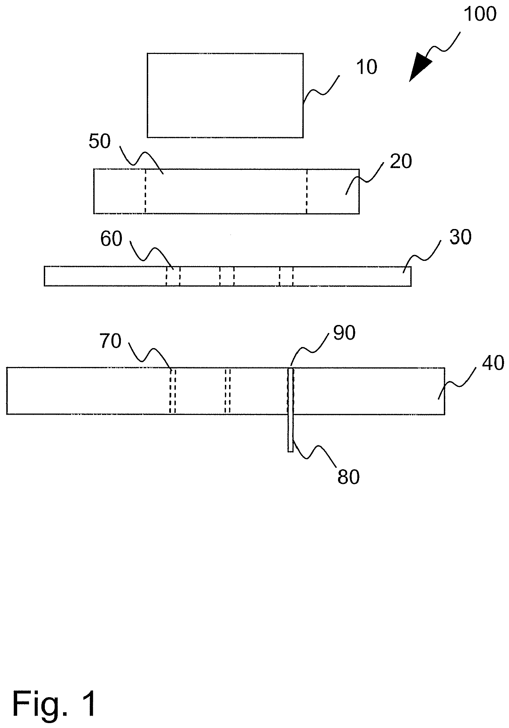

Mittels einer speziellen Vorrichtung welche in Fig. 1 schematisch dargestellt ist, ist es möglich einzelne Reibbelagpads in größeren Mengen herzustellen. Das Verfahren zur Herstellung von Pads sowie die Vorrichtung und die Funktion der Vorrichtung werden im Folgenden anhand von Fig. 1 erläutert.

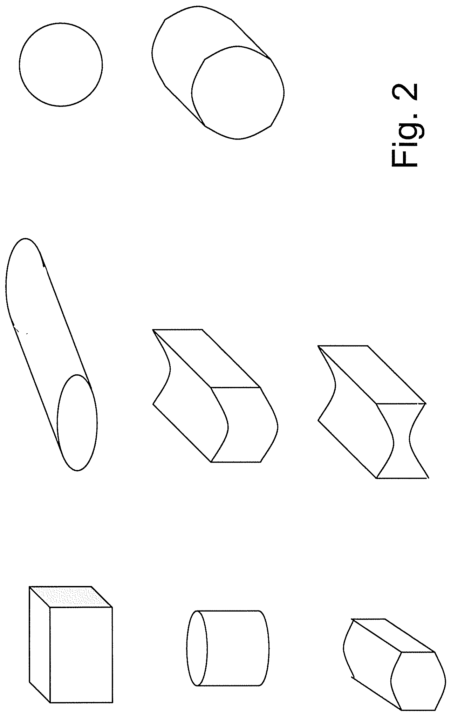

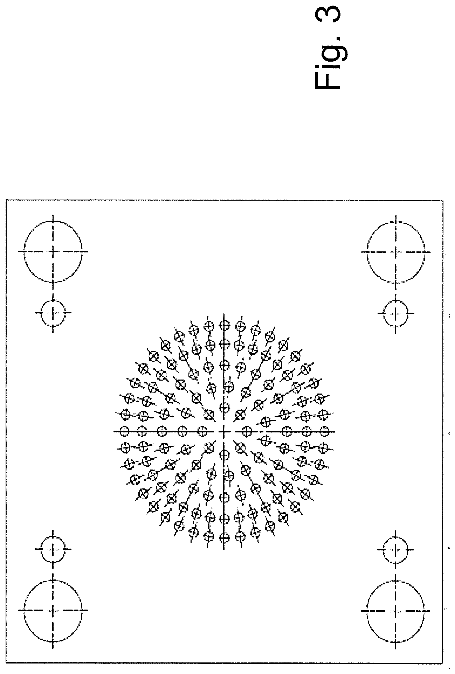

Die Herstellung der Pads erfolgt mit der Vorrichtung 100, welche ein kompaktes Presswerkzeug darstellt. Die Vorrichtung umfasst eine Formplatte 30, in die beispielsweise kreisförmig angeordnet Kavitäten 60 eingelassen sind, welche die Geometrie der entstehenden Pads bestimmen. Derartige Kavitäten 60 stellen Ausnehmungen in der Formplatte 30 dar und sind zur Unterseite und zur Oberseite der Formplatte 30 hin offen. Beispiele möglicher Formen der entstehenden Pads sind in Fig. 2 dargestellt. Ein Beispiel einer Formplatte 30 ist in Fig. 3 dargestellt. Die Formplatte 30 ist auf einer Unterplatte 40 mit einzelnen Auswerferstiften 80 - beispielsweise kann je Kavität 60 ein Auswerferstift 80 aber auch mehrere vorgesehen sein - befestigt oder durch Druck aufeinander gepresst. Die Unterplatte bildet mit den Stirnflächen 90 der nicht ausgefahrenen Auswerferstifte 80, welche in diesem Zustand in der Unterplatte 40 versenkt sind eine Ebene. Erst zum Auswerfen werden die Auswerferstifte 80 ausgefahren und die Stirnflächen der Auswerferstifte verlassen die Ebene der Unterplatte. Über der Formplatte 30 ist eine Dosierplatte 20 angebracht, in deren beispielsweise zylinderförmige Ausnehmung 50 das pulverförmige Reibmaterial auf den von der zylinderförmigen Ausnehmung 50 der Dosierplatte 20 freigelassenen Bereich der Formplatte 30 mit den Kavitäten 60 eindosiert wird. Die Unterplatte 40 schließt die Kavitäten 60 nach unten hin ab. Während des Dosier- und Pressvorgangs liegen Dosierplatte 20, Formplatte 30 und Unterplatte 40 derart aufeinander auf, dass sie sich nicht gegeneinander bewegen. Während des Pressvorgangs taucht der glatte Stempel 10 dann in die Ausnehmung 50 der Dosierplatte 20 ein und zwingt das Reibmaterial durch Druck und Temperierung des Werkzeugs in die Kavitäten 60 der Formplatte 30 zu fließen. Als Druck werden 10 bis 50 Megapascal, bevorzugt etwas 20 MPa aufgebracht, die Temperatur liegt bei 100 bis 280 Grad, bevorzugt bei 160 Grad. Ein Lüften im Zusammenhang mit dem Pressen ist vorgesehen.

Alle Einzelteile der Vorrichtung 100 - insbesondere die Formplatte 30 - sind einzeln austauschbar und modifizierbar. Es ist also möglich, unterschiedlichste Geometrien mit demselben Werkzeug zu verpressen, indem einfach die Formplatte gewechselt wird.

Nach dem Pressvorgang, der lediglich wenige Sekunden dauert, werden die einzelnen Pads ausgestoßen und durch einen innenseitig profilierten Schlauch abgesaugt, wobei entstandene Pressgrate entfernt werden. Im Anschluss werden die Pads dann lose in einem Ofen gehärtet und sind dann maßhaltig ohne weitere zusätzliche mechanische Bearbeitung.

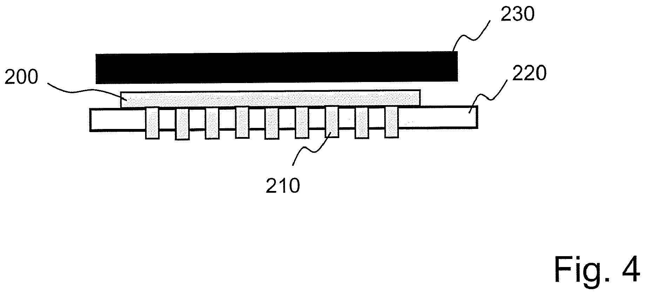

Eine alternative Lösung ist, mehr Reibmaterial einzudosieren, als für die Pads notwendig. Dadurch entsteht beim Pressen eine Platte 200 am oberen Ende der Pads 210, die diese miteinander verbindet. In einem anschließenden Schritt kann - wie in Fig. 4 dargestellt - diese Platte 200 samt der damit verbundenen Pads 210 in eine Führungsplatte 220 eingelegt werden, die dann durch eine Schleifmaschine gefahren wird, wobei eine Schleifscheibe 230 die Platte 200 entfernt und die Belagpads 210 so vereinzelt. Die Führungsplatte 220 trägt die Platte 200 samt der damit verbundenen Pads 210 und weist Ausnehmungen für die Pads 210 auf, welche die Pads aber nicht halten, sodass diese nach Abschleifen der Platte 200 aus den Ausnehmungen herausfallen können. Zwischen Führungsplatte 220 und Platte 200 kann ein Abstandshalter vorgesehen sein, sodass die Schleifscheibe 230 beim Schleifen der Platte 200 die Führungsplatte 220 nicht beschädigt. Dann ist ebenfalls ein Ofenzyklus notwendig, um die Reibbelagpads 210 auszuhärten.

Falls erforderlich kann eine Nachbehandlung erfolgen, wodurch beispielweise Nuten an den gewünschten Stellen der Pads 210 eingefügt werden. Derartige Nuten an den Pads können aber auch schon durch die Gestaltung der Kavitäten 60 vorgesehen werden, sodass eine diesbezügliche Nachbehandlung unnötig wird.

Die Reibbelagpads sind in sämtliche denkbaren Geometrien - also Formen - verpressbar, in einfache Quader, in rechteckige Formen mit Fasen und Radien - also Rundungen - oder in eine runde Gestalt. In Figur 2 sind einige beispielhafte Geometrien dargestellt. Die Geometrie ist an die Bedingungen der jeweiligen Anwendung anpassbar. Auf diese Weise kann das Komfortverhalten der Reibpaarung optimiert werden. Ebenso können - wie bereits ausgeführt - in die Reibbelagpads diverse Nuten eingebracht werden, so dass über Geometrie und Nutung eine optimale Ölverdrängung stattfinden kann und so ein hoher Reibwert sehr schnell aufgebaut werden kann, um eine zügige Synchronisation zu gewährleisten.

Die Erfindung umfasst die Herstellung eines Reibmaterials zum Einsatz in der Synchronisationseinrichtungen.

Das Reibmaterial ist in seiner Form variabel zu gestalten, da das Friction-Pad-System viele Freiheitsgrade zulässt. Das Material kann als Mischung enthaltend Metallpartikeln und Phenolharz in den unterschiedlichsten Geometrien hergestellt werden. Die Vorrichtung zur Herstellung ist ebenfalls variabel gestaltet, so dass mit einem einzigen Werkzeug Materialien von unterschiedlichem Verhalten verpresst werden können und durch einen einfachen Austausch der Formplatte ebenfalls unterschiedliche Geometrien dargestellt werden können.

### Bezugszeichenliste

- 10: Stempel
- 20: Dosierplatte
- 30: Formplatte
- 40: Unterplatte
- 50: Ausnehmung
- 60: Kavität
- 70: Ausnehmung für Auswerferstift
- 80: Auswerferstift
- 90: Stirnfläche eines Auswerferstifts
- 100: Presswerkzeug
- 200: Platte
- 210: Pad
- 220: Führungsplatte
- 230: Schleifscheibe

## Patentansprüche

1. Reibelement für eine Synchronisiereinrichtung, wobei die Zusammensetzung des Reibelements folgendes enthält:
- 1-25% Friction Dust,
- 5-45% Phenolharz unmodifiziert oder modifiziert mit Cashewnußschalenöl oder NBR-Kautschuk,
- 1-25% anorganische Fasern, P090384/10
- 1-25% Carbonfasern,
- 1-50% Celite und/oder Kokosnussschalenmehl,
- 1-30% Metallfasern oder Metallpulver,
- 1-25% organische Naturfasern,
- 0-15% SiC,
- 0-15% Chromoxid.

2. Reibelement nach Anspruch 1, wobei die Zusammensetzung des Reibelements folgendes enthält:
- 1-10% Friction Dust,
- 15-25% Phenolharz modifiziert mit Cashewnußschalenöl,
- 5-15% Mineralwolle ohne Shotanteil,
- 5-15% Carbonfasern,
- 15-25% Celite,
- 15-25% Kokosnussschalenmehl,
- 1-10% Kupferfasern,
- 5-15% Baumwollfasern.
